# EUROPEAN PATENT APPLICATION

(11) **EP 4 765 348 A1**
(43) Date of publication of application: **24.06.2026**
(21) Application number: 25852094.9
(22) Date of filing: 04.08.2025
(51) Int. Cl.: H01M 50/102, H01M 50/147, H01M 50/543, H01M 50/119, H01M 50/121, H01M 50/124, H01M 50/14

(54) **SECONDARY BATTERY AND BATTERY PACK COMPRISING SAME**

(30) Priority: 05.08.2024 KR 20240104155
(71) Applicant: LG Energy Solution, Ltd., Seoul 07335 (KR)
(72) Inventor: LEE, Min Kyu, Daejeon 34122 (KR); CHOI, Ji Eun, Daejeon 34122 (KR); KIM, Sang Hun, Daejeon 34122 (KR); LEE, Jae Ho, Daejeon 34122 (KR); LEE, Ji Sun, Daejeon 34122 (KR)
(74) Representative: Plasseraud IP
(86) International application number: PCT/KR2025/011559
(87) International publication number: WO 2026/034919

(57) **Abstract**

The present disclosure relates to a secondary battery. A secondary battery according to an aspect of the present disclosure may include an electrode assembly extending in a first direction; a cap including a cover portion disposed on one side of the electrode assembly in the first direction and an extension portion extending from the cover portion toward the electrode assembly; and an exterior film surrounding the electrode assembly and coupled to the extension portion. The exterior film may include an accommodating portion that circumferentially surrounds the electrode assembly; a rim portion provided on one side of the accommodating portion in the first direction; and a coupling portion provided between the accommodating portion and the rim portion, coupled to the extension portion, and located at a predetermined first distance (d1) from a reference surface among outer surfaces of the cover portion, the reference surface facing the first direction.

## Description

### TECHNICAL FIELD

### CROSS-REFERENCE TO RELATED APPLICATIONS

The present application is based on and claims priority from Korean Patent Application No. 10-2024-0104155, filed on August 5, 2024, with the Korean Intellectual Property Office, the disclosure of which is incorporated herein in its entirety by reference.

### TECHNICAL FIELD

The present disclosure relates to a secondary battery and a battery pack including the same, and more particularly, to a secondary battery capable of charging and discharging electrical energy and a battery pack including the same.

### BACKGROUND ART

In general, types of secondary batteries include nickel-cadmium batteries, nickel-metal hydride batteries, lithium-ion batteries, and lithium-ion polymer batteries. Such secondary batteries are applied and used not only in small products such as digital cameras, P-DVDs, MP3Ps, mobile phones, PDAs, Portable Game Devices, Power Tools, and E-bikes, but also in large products requiring high power output, such as electric vehicles or hybrid vehicles, as well as in power storage devices for storing surplus generated electricity or renewable energy, and in backup power storage devices.

A secondary battery includes an electrode assembly in which positive electrodes, negative electrodes, and separators are stacked, a case accommodating the electrode assembly, and electrode leads for electrically connecting the electrode assembly to the outside. Such secondary batteries may be referred to as cylindrical, prismatic, or pouch type depending on the structure or shape of the case. The case requires certain functions for the operation of the secondary battery. For example, it may be required to have hermeticity to prevent leakage of an internal electrolyte or the electrode assembly, insulation properties to achieve electrical insulation between the electrode assembly and the outside, and durability against external contamination or impact.

### DISCLOSURE

### TECHNICAL PROBLEM

The present disclosure has been devised to solve the above problems, and an object of the present disclosure is to provide a secondary battery with improved hermeticity and a battery pack including the same.

Another aspect is to provide a secondary battery and a battery pack including the same with improved insulation.

A further aspect is to provide a secondary battery and a battery pack including the same with improved durability.

The problems described above are not limited to those mentioned, and other problems not mentioned will be apparent to those skilled in the art from the following description.

### TECHNICAL SOLUTION

According to one aspect of the present disclosure, there is provided a secondary battery including: an electrode assembly extending in a first direction; a cap including a cover portion disposed on one side of the electrode assembly in the first direction and an extension portion extending from the cover portion toward the electrode assembly; and an exterior film surrounding the electrode assembly and coupled to the extension portion, wherein the exterior film includes: an accommodating portion that circumferentially surrounds the electrode assembly; a rim portion provided on one side of the accommodating portion in the first direction; and a coupling portion provided between the accommodating portion and the rim portion, coupled to the extension portion, and located at a predetermined first distance (d1) from a reference surface among outer surfaces of the cover portion, the reference surface facing the first direction.

In some embodiments, the first distance (d1) may be 10% or more and 55% or less of a width (w1) of the coupling portion in the first direction.

In some embodiments, the rim portion may be in contact with or adjacent to an outer surface of the cap.

In some embodiments, the rim portion may be a free end so that it can move away from or closer to the cap.

In some embodiments, a width (w2) of the rim portion in the first direction may be shorter than the first distance (d1).

In some embodiments, the width (w2) of the rim portion in the first direction may be 5% or more and 50% or less of the width (w1) of the coupling portion in the first direction.

In some embodiments, the rim portion may be located at a predetermined second distance (d2) from the reference surface, and the second distance (d2) may be 5% or more and 50% or less of the width (w1) of the coupling portion in the first direction.

In some embodiments, an end of the extension portion may be located at a predetermined third distance (d3) from the coupling portion.

In some embodiments, the third distance (d3) may be 5% or more and 50% or less of the width (w1) of the coupling portion in the first direction.

In some embodiments, the cover portion may have a plate shape extending in a direction perpendicular to the first direction.

In some embodiments, the extension portion may have a sidewall shape extending from a peripheral part of the cover portion.

In some embodiments, the extension portion may have a ring shape extending in the circumferential direction, and the coupling portion and the rim portion may be provided along a circumference of the extension portion.

In some embodiments, the secondary battery may further include a terminal, at least a portion of which is exposed to an outside of the cap through the reference surface, to allow electrical connection between the electrode assembly and the outside.

In some embodiments, the terminal may pass through the cover portion.

In some embodiments, the extension portion may include: an outer extension part; and an inner extension part embedded within the outer extension part and made of a material different from that of the outer extension part.

In some embodiments, the inner extension part may include a metal, and the outer extension part may include a resin layer that can be melted by heat or pressure.

According to another aspect of the present disclosure, there is provided a battery pack including: at least one of the aforementioned secondary batteries; and packaging for accommodating the secondary battery.

### ADVANTAGEOUS EFFECTS

According to one aspect of the present disclosure, since the coupling portion of the exterior film and the outer surface of the cap are coupled to each other, and the rim portion is provided on one side of the coupling portion, the cap can be prevented from excessively protruding to the outside of the exterior film. As a result, the hermeticity and insulation properties of the space enclosed by the cap and the exterior film can be improved.

According to one aspect of the present disclosure, since the rim portion minimizes the exposure of a portion (e.g., a resin layer) provided between the coupling portion and the outer surface of the cap for coupling them, the durability and appearance of the secondary battery can be improved.

The effects of the present disclosure are not limited to the effects mentioned above, and other unmentioned effects will be clearly understood by those skilled in the art from the present specification and the accompanying drawings.

### DESCRIPTION OF DRAWINGS

FIG. 1 is a perspective view of a secondary battery according to an embodiment of the present disclosure, viewed from above.
FIG. 2 is an exploded perspective view of the secondary battery according to an embodiment of the present disclosure.
FIG. 3 is a cross-sectional view taken along the line I-I of FIG. 1.
FIG. 4 is an enlarged view of portion A of FIG. 3.
FIG. 5 is a plan view of the secondary battery according to an embodiment of the present disclosure, viewed from above.

### DETAILED DESCRIPTION

Hereinafter, preferred embodiments of the present disclosure will be described in detail so that those skilled in the art can easily carry out the disclosure. However, the present disclosure may be embodied in many different forms and is not limited or restricted by the embodiments set forth herein.

In order to clearly describe the present disclosure, detailed descriptions of related known technologies that are irrelevant to the description or that may unnecessarily obscure the gist of the present disclosure are omitted. In adding reference numerals to the components of each drawing in the present specification, the same or similar reference numerals are used for the same or similar components throughout the specification.

Furthermore, the terms and words used in the present specification and claims should not be interpreted as being limited to their common or dictionary meanings. Based on the principle that an inventor can appropriately define the concept of a term to describe his or her own disclosure in the best way, they should be interpreted with meanings and concepts that conform to the technical idea of the present disclosure.

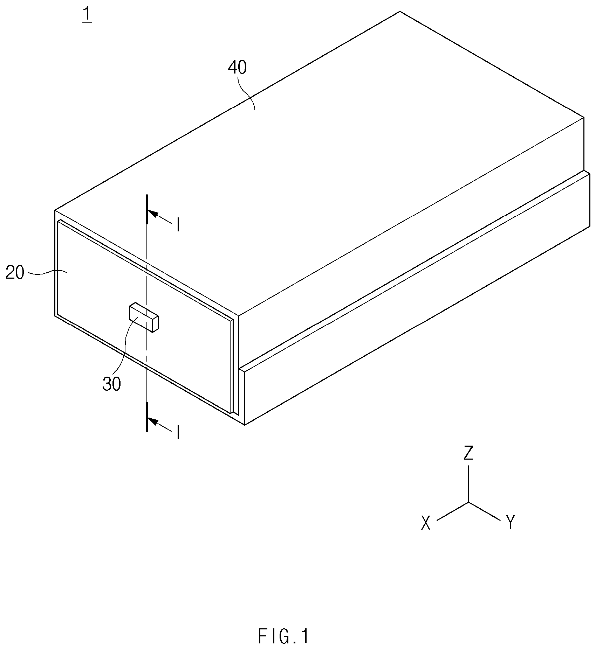

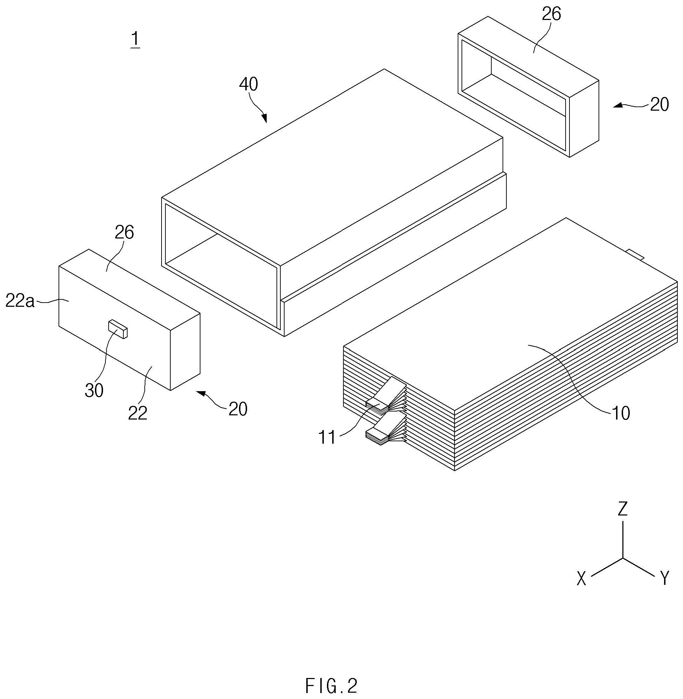

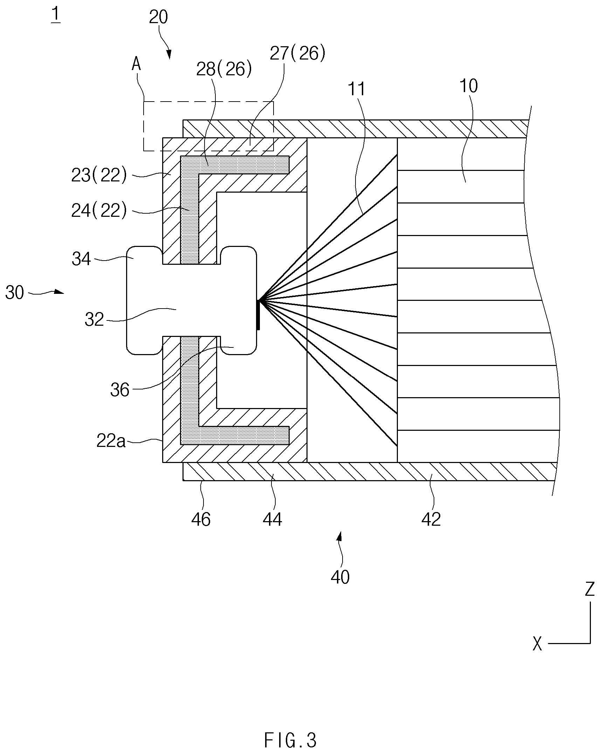

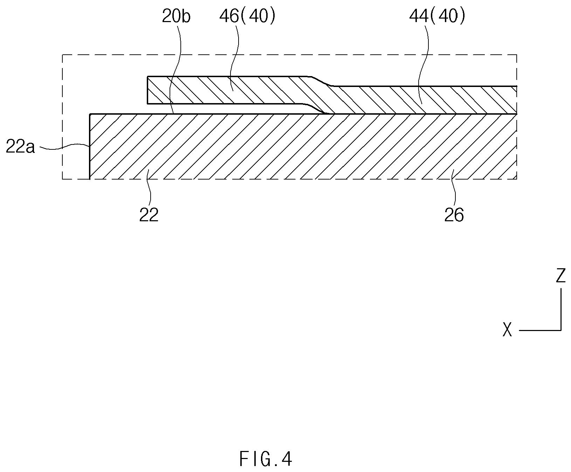

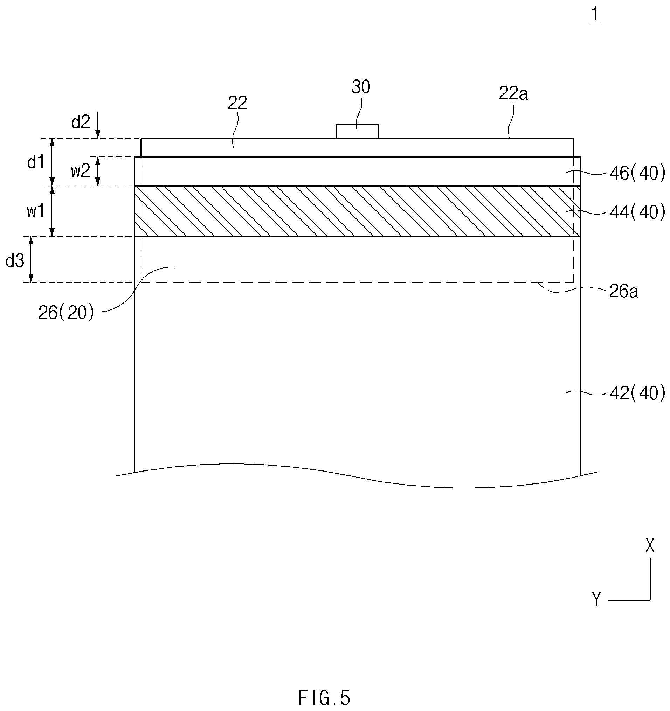

FIG. 1 is a perspective view of a secondary battery according to an embodiment of the present disclosure, viewed from above. FIG. 2 is an exploded perspective view of the secondary battery according to an embodiment of the present disclosure. FIG. 3 is a cross-sectional view taken along the line I-I of FIG. 1. FIG. 4 is an enlarged view of portion A of FIG. 3. FIG. 5 is a plan view of the secondary battery according to an embodiment of the present disclosure, viewed from above. In FIG. 5, the extension portion of the cap surrounded by the exterior film is indicated by a dashed line, and the area corresponding to the coupling portion of the exterior film is indicated by hatching.

Referring to FIGS. 1 to 5, a secondary battery according to an embodiment of the present disclosure is disclosed. Referring to FIGS. 1 and 2, a secondary battery (1) according to an embodiment of the present disclosure may include an electrode assembly (10). The electrode assembly (10) may be a component responsible for the charging and discharging functions in the secondary battery.

For this purpose, the electrode assembly (10) may have a structure in which a plurality of positive electrodes, separators, and negative electrodes are sequentially stacked. The electrode assembly (10) may be generally referred to as a cylindrical type, a stack type, or a stack-and-folding type depending on its shape or structure. In this embodiment, the shape or structure of the electrode assembly (10) is not particularly limited.

In this embodiment, the electrode assembly (10) may extend in a first direction (X-axis direction). In other words, the electrode assembly (10) may have a predetermined length in the first direction (X-axis direction). Here, the direction surrounding the axis parallel to the first direction (X-axis direction) may be referred to as a circumferential direction.

Meanwhile, in this embodiment, an electrode tab (11) may be provided on one side of the electrode assembly (10) in the first direction (X-axis direction). The electrode tab (11) may extend from the aforementioned positive electrode and/or negative electrode. The electrode tab (11) may be electrically connected to the outside via a terminal (30) to be described later. The position where the electrode tab (11) extends or is placed is not particularly limited.

Referring to FIGS. 2 and 3, the secondary battery (1) according to an embodiment of the present disclosure may include a cap (20). The cap (20) may be a component for covering one side of the electrode assembly (10) in the longitudinal direction (X-axis direction).

In this embodiment, the cap (20) may be configured as a pair. The pair of caps (20) may respectively cover both sides of the electrode assembly (10) in the longitudinal direction (X-axis direction). However, if necessary, it would also be possible to configure only one cap (20) to cover only one side of the electrode assembly (10).

Meanwhile, the cap (20) according to an embodiment of the present disclosure may include a cover portion (22). The cover portion (22) may be disposed on one side of the electrode assembly (10) in the longitudinal direction (X-axis direction). The cover portion (22) may have a plate shape. Here, the plate may extend in a direction (Y-axis direction and/or Z-axis direction) perpendicular to the longitudinal direction (X-axis direction) of the electrode assembly (10).

The cover portion (22) may include a reference surface (22a). The reference surface (22a) may be a surface among the outer surfaces of the cover portion (22) that faces outward along the longitudinal direction (X-axis direction) of the electrode assembly (10). In other words, the reference surface (22a) may be a surface facing the first direction (X-axis direction).

In this embodiment, the reference surface (22a) is configured as a flat plane extending in a direction (Y-axis and/or Z-axis direction) perpendicular to the longitudinal direction (X-axis direction), but the reference surface (22a) is not particularly limited as long as it faces outward from the electrode assembly (10) along the longitudinal direction (X-axis direction).

Meanwhile, according to this embodiment, the cover portion (22) may include an inner cover part (24) and an outer cover part (23). The inner cover part (24) may be a plate having a predetermined thickness.

In this embodiment, the inner cover part (24) may be made of a material with higher rigidity than the outer cover part (23). For example, the inner cover part (24) may be made of a metal such as aluminum (Al), but is not limited thereto. As a result, the structural stability of the cap (20) can be improved.

In this embodiment, the outer cover part (23) may be configured to surround the outer surface of the inner cover part (24). In other words, the outer cover part (23) may be a layer structure provided with a predetermined thickness on the outer surface of the inner cover part (24). Of course, if necessary, the outer cover part (23) may be configured to partially cover only a region of the outer surface of the inner cover part (24).

Referring again to FIGS. 2 and 3, the cap (20) according to an embodiment of the present disclosure may include an extension portion (26). The extension portion (26) may be a component of the cap (20) that is coupled to an exterior film (40) to be described later. The coupling structure of the extension portion (26) and the exterior film (40) will be described later in relation to the coupling portion (44).

In this embodiment, the extension portion (26) may extend from the cover portion (22) toward the electrode assembly (10). The extension portion (26) may have a sidewall shape extending from a peripheral part of the cover portion (22). As shown, in this embodiment, the cover portion (22) may have a rectangular plate shape, and the extension portion (26) may extend from each of the four sides of the cover portion (22).

Here, the extension portion (26) may have a rectangular ring shape when viewed in the longitudinal direction of the electrode assembly (10). Through this, the exterior film (40) to be described later can circumferentially surround the extension portion (26). Therefore, a hermetic seal of the electrode assembly (10) by the exterior film (40) and the cap (20) can be achieved.

Meanwhile, referring to FIG. 3, in this embodiment, the extension portion (26) may include an inner extension part (28) and an outer extension part (27). The inner extension part (28) may be made of a material with higher rigidity than the outer extension part (27).

In this embodiment, the inner extension part (28) may be connected to the inner cover part (24). The inner extension part (28) may extend toward the electrode assembly (10) from a peripheral part of the inner cover part (24). The inner extension part (28) may be made of the same material as the inner cover part (24).

In this embodiment, the outer extension part (27) may be configured to surround the outer surface of the inner extension part (28). The outer extension part (27) may be connected to the outer cover part (23).

Of course, if necessary, the outer extension part (27) may be configured to cover only a region of the outer surface of the inner extension part (28). For example, the outer extension part (27) may be configured to circumferentially surround the outer surface of the inner extension part (28).

In this embodiment, the outer extension part (27) may include a resin layer that can be melted by heat or pressure. Accordingly, the resin layer of the outer extension part (27) can be partially melted and coupled with the exterior film (40), and the electrode assembly (10) surrounded by the cap (20) and the exterior film (40) can be isolated from the outside and sealed.

Of course, if necessary, the aforementioned resin layer may be provided on the outer surface of the exterior film (40), and a separate resin layer may not be provided on the outer surface of the extension portion (26). Alternatively, resin layers may be provided on both the outer surface of the exterior film (40) and the outer surface of the extension portion (26).

As another example, the exterior film (40) and the extension portion (26) may be coupled by a separate bonding layer interposed therebetween. In this case, the extension portion (26) and/or the exterior film (40) may not include a separate resin layer. The bonding layer may be made of a predetermined adhesive. The adhesive may include a hydrophobic substance.

Meanwhile, in this embodiment, the cover portion (22) of the cap (20) is shown as a plate with a uniform thickness. However, the plate shape should be interpreted to include shapes where the thickness of one part and another part are different. Furthermore, in this embodiment, the cover portion (22) of the cap (20) is described as having a plate shape. However, the shape or structure of the cover portion (22) is not particularly limited as long as it can cover one side of the electrode assembly (10).

Referring again to FIGS. 1 to 3, the secondary battery (1) according to an embodiment of the present disclosure may include a terminal (30). The terminal (30) is a component for electrically connecting the electrode assembly (10) to the exterior. For this purpose, the terminal (30) may be made of a conductive material.

In this embodiment, the terminal (30) may include a body portion (32). The body portion (32) may pass through the cover portion (22) of the cap (20). The body portion (32) may have a cylindrical shape, but is not limited thereto.

In this embodiment, the terminal (30) may include an outer locking portion (34). The outer locking portion (34) may be provided on one side of the body portion (32). The one side may be a portion facing the outside of the electrode assembly (10).

Here, the outer locking portion (34) may have a larger cross-sectional area than the body portion (32). Due to this, the outer locking portion (34) can be caught by the cover portion (22). Therefore, the movement of the terminal (30) toward the electrode assembly (10) beyond a certain distance can be restricted.

In this embodiment, the terminal (30) may include an inner locking portion (36). The inner locking portion (36) may be provided on the other side of the body portion (32). The other side may be a portion facing the electrode assembly (10). The electrode tab (11) may be coupled to the inner locking portion (36). For example, the electrode tab (11) may be welded to the outer surface of the inner locking portion (36), but is not limited thereto.

Here, the inner locking portion (36) may have a larger cross-sectional area than the body portion (32). Due to this, the inner locking portion (36) can be caught by the cover portion (22). Therefore, the movement of the terminal (30) to the outside of the electrode assembly (10) beyond a certain distance can be restricted.

Referring to FIGS. 2 to 5, the secondary battery (1) according to an embodiment of the present disclosure may include an exterior film (40). The exterior film (40) is a component for covering the portion of the outer surface of the electrode assembly (10) that is not covered by the cap (20).

In this embodiment, the exterior film (40) may include an accommodating portion (42). The accommodating portion (42) may circumferentially surround the electrode assembly (10) between the pair of caps (20). Through this, the electrode assembly (10) can be entirely covered by the cap (20) and the exterior film (40).

The accommodating portion (42) may have a predetermined width in the aforementioned first direction (or the longitudinal direction of the electrode assembly (10)) (X-axis direction). That is, the width direction of the accommodating portion (42) and the longitudinal direction of the electrode assembly (10) may be parallel. The width of such an accommodating portion (42) can be appropriately set considering the length of the electrode assembly (10), the length of the extension portion (26), the gap between the caps (20), and so on.

In this embodiment, the exterior film (40) may include a coupling portion (44). The coupling portion (44) may be a part of the exterior film (40) that is directly coupled with the extension portion (26) of the cap (20). The coupling portion (44) may be provided on one side of the accommodating portion (42) in the width direction (X-axis direction).

Such a coupling portion (44) may be formed as the resin layer of the exterior film (40) and the resin layer of the extension portion (26) are partially melted and then solidified, or it may be formed by a separate bonding layer interposed therebetween. The way the coupling portion (44) and the extension portion (26) are coupled is not particularly limited.

In this embodiment, the coupling portion (44) may be provided along the periphery of the accommodating portion (42). In other words, the coupling portion (44) may have a ring shape when viewed in the longitudinal direction (X-axis direction) of the electrode assembly (10). Through this, hermeticity between the exterior film (40) and the cap (20) can be secured.

Here, in this embodiment, the coupling portion (44) may have a predetermined first width (w1) in the longitudinal direction (X-axis direction) of the electrode assembly (10). In the illustrated embodiment, the first width (w1) is shown to be uniform along the circumferential direction of the electrode assembly (10). However, if necessary, the first width (w1) in one section and another section may have different sizes.

Meanwhile, in this embodiment, the coupling portion (44) may be located at a first distance (d1) from the reference surface (22a) in the longitudinal direction (X-axis direction) of the electrode assembly (10). The first distance (d1) may mean the distance from the reference surface (22a) to a periphery of the coupling portion (44).

Here, the periphery may be the periphery located closer to the reference surface (22a) among the peripheries provided on both sides in the width direction (X-axis direction). This first distance (d1) may be equal to the sum of a second width (w2) and a second distance (d2) to be described later.

In this embodiment, the first distance (d1) may be 10% or more of the first width (w1). Alternatively, the first distance (d1) may be 20% or more of the first width (w1). Alternatively, the first distance (d1) may be 30% or more of the first width (w1). On the other hand, the first distance (d1) may be 55% or less of the first width (w1). Alternatively, the first distance (d1) may be 45% or less of the first width (w1). The first distance (d1) may be 35% or less of the first width (w1). This configuration may be to secure the insulation properties of the secondary battery (1).

Referring to FIGS. 3 to 5, the exterior film (40) of the secondary battery (1) according to an embodiment of the present disclosure may include a rim portion (46). The rim portion (46) may be a component for improving the coupling property, insulation property, and durability of the secondary battery (1).

In this embodiment, the rim portion (46) may be provided on one side of the coupling portion (44) and the accommodating portion (42) in the width direction (X-axis direction). The rim portion (46) may be located on the opposite side of the accommodating portion (42) with the coupling portion (44) interposed therebetween. The rim portion (46) may be connected to the accommodating portion (42) by the coupling portion (44).

In this embodiment, the rim portion (46) may be provided along the periphery of the coupling portion (44). In other words, the rim portion (46) may have a ring shape when viewed in the longitudinal direction (X-axis direction) of the electrode assembly (10).

Here, in this embodiment, the rim portion (46) may be in contact with or adjacent to an outer surface (20b) of the cap (20). The rim portion (46) may be configured as a free end so that it can move away from or closer to the cap (20).

That is, the rim portion (46) can prevent the portion where the coupling portion (44) and the cap (20) are coupled from being directly exposed to the outside. More specifically, a predetermined space may be provided between the rim portion (46) and the cap (20). This space can function as a clearance space where the melted resin (or adhesive) between the coupling portion (44) and the extension portion (26) can flow. In other words, the resin (or adhesive) may not be directly exposed to the outside due to the rim portion (46).

Through this, the appearance, insulation properties, and coupling properties of the secondary battery (1) can be improved. In addition, since the resin (or adhesive) can be protected from external impact, contamination, or corrosion, the durability of the secondary battery (1) can be improved.

Meanwhile, in this embodiment, the rim portion (46) may have a predetermined second width (w2) in the longitudinal direction (X-axis direction) of the electrode assembly (10). In the illustrated embodiment, the second width (w2) is shown to be uniform in the circumferential direction of the electrode assembly (10). However, if necessary, the second width (w2) may have different sizes in one section and another section.

Here, the second width (w2) may be shorter than the first distance (d1). In other words, a part of the outer surface of the extension portion (26) may not be covered by the exterior film (40) and may be exposed to the outside. This configuration can further improve the appearance, durability, coupling properties, and insulation properties of the secondary battery (1).

The second width (w2) may be 5% or more of the first width (w1). Alternatively, the second width (w2) may be 15% or more of the first width (w1). Alternatively, the second width (w2) may be 25% or more of the first width (w1). On the other hand, the second width (w2) may be 55% or less of the first width (w1). Alternatively, the second width (w2) may be 45% or less of the first width (w1). Alternatively, the second width (w2) may be 35% or less of the first width (w1). This configuration may be to secure the insulation properties, durability, and appearance of the secondary battery (1).

Referring to FIGS. 3 to 5, in this embodiment, the rim portion (46) may be located at a second distance (d2) from the reference surface (22a) in the longitudinal direction (X-axis direction) of the electrode assembly (10).

This second distance (d2) may mean the distance from the reference surface (22a) to a periphery of the rim portion (46). Here, the periphery may be the periphery located closer to the reference surface (22a) among the peripheries provided on both sides in the width direction (X-axis direction).

The second distance (d2) may be 5% or more of the first width (w1). Alternatively, the second distance (d2) may be 15% or more of the first width (w1). Alternatively, the second distance (d2) may be 25% or more of the first width (w1). On the other hand, the second distance (d2) may be 55% or less of the first width (w1). Alternatively, the second distance (d2) may be 45% or less of the first width (w1). Alternatively, the second distance (d2) may be 35% or less of the first width (w1). This configuration may be to simultaneously secure the durability, insulation properties, and appearance of the secondary battery (1).

Referring again to FIG. 5, in an embodiment of the present disclosure, the coupling portion (44) and an end (26a) of the extension portion (26) may be located at a predetermined third distance (d3) from each other. Here, the third distance (d3) may be the distance from a periphery of the coupling portion (44) to the end (26a) of the extension portion (26).

Here, the end (26a) of the extension portion (26) may be an end located inside the exterior film (40), and the periphery of the coupling portion (44) may be the periphery located closer to the end (26a) of the extension portion (26) among the peripheries provided on both sides in the width direction (X-axis direction).

In this embodiment, the third distance (d3) may be 5% or more of the first width (w1). Alternatively, the third distance (d3) may be 15% or more of the first width (w1). Alternatively, the third distance (d3) may be 25% or more of the first width (w1). On the other hand, the third distance (d3) may be 55% or less of the first width (w1). Alternatively, the third distance (d3) may be 45% or less of the first width (w1). Alternatively, the third distance (d3) may be 35% or less of the first width (w1). This configuration may be to simultaneously secure the durability, insulation properties, and appearance of the secondary battery (1).

Hereinafter, a battery pack according to an embodiment of the present disclosure will be described.

A battery pack according to an embodiment of the present disclosure may include at least one secondary battery and packaging for accommodating the secondary battery. Here, the secondary battery may be the secondary battery according to the embodiment of the present disclosure described above.

In this embodiment, the packaging may include a housing in the shape of an enclosure for accommodating the secondary battery. The housing may be provided with at least one support frame for supporting the secondary battery.

Here, the housing may be installed with a bus bar for electrically connecting the secondary battery accommodated therein to the exterior, a vent plug for communicating the inside and the outside, and so on. The structure or shape of such packaging may be appropriately modified as needed.

Although the present disclosure has been described with reference to the limited embodiments and drawings, the present disclosure is not limited thereto, and various implementations are possible within the technical scope of the present disclosure and the equivalent scope of the claims to be described below by those skilled in the art to which the present disclosure pertains.

**[List of Reference Numerals]**

| | | | |
|---|---|---|---|
| 1: | Secondary battery | 10: | Electrode assembly |
| 20: | Cap | 22: | Cover portion |
| 26: | Extension portion | 30: | Terminal |
| 32: | Body portion | 34: | Outer locking portion |
| 36: | Inner locking portion | 40: | Exterior film |
| 42: | Accommodating portion | 44: | Coupling portion |
| 46: | Rim portion | d1: | First distance |
| d2: | Second distance | d3: | Third distance |
| w1: | First width | w2: | Second width |

## Claims

1. A secondary battery, comprising:
an electrode assembly extending in a first direction;
a cap comprising a cover portion disposed on one side of the electrode assembly in the first direction, and an extension portion extending from the cover portion toward the electrode assembly;
and an exterior film surrounding the electrode assembly and coupled to the extension portion,
wherein the exterior film comprises:
an accommodating portion that circumferentially surrounds the electrode assembly;
a rim portion provided on one side of the accommodating portion in the first direction; and
a coupling portion provided between the accommodating portion and the rim portion, coupled to the extension portion, and located at a predetermined first distance (d1) from a reference surface among outer surfaces of the cover portion, the reference surface facing the first direction.

2. The secondary battery according to claim 1,
wherein the first distance (d1) is 10% or more and 55% or less of a width (w1) of the coupling portion in the first direction.

3. The secondary battery according to claim 1,
wherein the rim portion is in contact with or adjacent to an outer surface of the cap.

4. The secondary battery according to claim 1,
wherein the rim portion is a free end configured to move away from or closer to the cap.

5. The secondary battery according to claim 1,
wherein a width (w2) of the rim portion in the first direction is shorter than the first distance (d1).

6. The secondary battery according to claim 5,
wherein the width (w2) of the rim portion in the first direction is 5% or more and 50% or less of a width (w1) of the coupling portion in the first direction.

7. The secondary battery according to claim 5,
wherein the rim portion is located at a predetermined second distance (d2) from the reference surface, and the second distance (d2) is 5% or more and 50% or less of a width (w1) of the coupling portion in the first direction.

8. The secondary battery according to claim 1,
wherein an end of the extension portion is located at a predetermined third distance (d3) from the coupling portion.

9. The secondary battery according to claim 8,
wherein the third distance (d3) is 5% or more and 50% or less of a width (w1) of the coupling portion in the first direction.

10. The secondary battery according to claim 1,
wherein the cover portion has a plate shape extending in a direction perpendicular to the first direction.

11. The secondary battery according to claim 10,
wherein the extension portion has a sidewall shape extending from a peripheral part of the cover portion.

12. The secondary battery according to claim 11,
wherein the extension portion has a ring shape extending in the circumferential direction, and the coupling portion and the rim portion are provided along a circumference of the extension portion.

13. The secondary battery according to claim 1, further comprising:
a terminal, at least a portion of which is exposed to an outside of the cap through the reference surface to allow electrical connection between the electrode assembly and an outside.

14. The secondary battery according to claim 13,
wherein the terminal passes through the cover portion.

15. The secondary battery according to claim 1,
wherein the extension portion comprises:
an outer extension part; and
an inner extension part embedded within the outer extension part and made of a material different from a material of the outer extension part.

16. The secondary battery according to claim 15,
wherein the inner cover part comprises a metal, and
the outer cover part comprises a resin layer capable of being melted by heat or pressure.

17. A battery pack, comprising:
at least one secondary battery according to claim 1; and packaging for accommodating the secondary battery.
